# EUROPEAN PATENT APPLICATION

(11) **EP 4 582 828 A1**
(43) Date of publication of application: **09.07.2025**
(21) Application number: 25150047.6
(22) Date of filing: 02.01.2025
(51) Int. Cl.: G01S 5/00, G01S 5/02, H04W 4/02, H04W 64/00

(54) **USER EQUIPMENT SUPPORTING NEURAL NETWORK-BASED POSITIONING FUNCTION AND OPERATING METHOD OF THE SAME**

(30) Priority: 02.01.2024 KR 20240000499; 08.05.2024 KR 20240060757
(71) Applicant: Samsung Electronics Co., Ltd., Suwon-si, Gyeonggi-do 16677 (KR)
(72) Inventor: KWON, Yangsoo, 16677, Suwon-si (KR); CHOI, Yoojin, 16677 Suwon-si (KR); KIM, Jinho, 16677 Suwon-si (KR)
(74) Representative: Marks & Clerk LLP

(57) **Abstract**

A user equipment supporting a first positioning function may include a transceiver configured to receive first wireless signals from a base station at a first position of the user equipment, and a first processor configured to control the transceiver, wherein the first processor is configured to, based on the first wireless signals, generate first values of a plurality of first indicators, and perform an operation according to the first positioning function of determining based on the first values whether the first position corresponds to a first specific position.

## Description

### BACKGROUND

The inventive concepts relate to wireless communication, and particularly, to user equipment supporting a positioning function of determining a position of the user equipment and an operating method of the same.

Among wireless communication technologies, technology for determining (or recognizing) the position of a user equipment (e.g., a user's a mobile device) is called positioning. As an example, a method of using satellite signals received from a satellite, a method of using wireless signals of a wireless network (e.g., long term evolution (LTE), new radio (NR), etc.) has been proposed as positioning.

The method of using satellite signals determines the position of the user equipment by using a plurality of pieces of satellite information through a global navigation satellite system (GNSS). The method of using satellite signals may determine the position of the user equipment with high accuracy outdoors, but has limitations in that the method may not accurately determine the position of the user equipment indoors.

In addition, the method of using wireless signals of the wireless network is called observed time difference of arrival (OTDOA) or uplink-time difference of arrival (UTDOA). Specifically, in the method of using wireless signals of the wireless network, the user equipment receives positioning reference signals (PRSs) for position determination transmitted by a plurality of base stations, and transmits reference signal time difference (RSTD) information including reception time differences of the received PRSs back to the base stations so that the base stations determine the position of the user equipment. The base stations determine the position of the user equipment by transmitting the RSTD information received from the user equipment to a location management function (LMF). However, the method of using wireless signals of the wireless network is affected by the RSTD measurement performance of the user equipment and has limitations in that the method may not accurately determine the position of the user equipment indoors.

### SUMMARY

The inventive concepts provide a user equipment determining a position of the user equipment with high accuracy by using the characteristics of wireless signals processed by the user equipment using a neural network model and an operating method of the same.

According to an aspect of the inventive concepts, there is provided a user equipment configured to support a first positioning function including a transceiver configured to receive first wireless signals from a base station at a first position of the user equipment, and a first processor configured to control the transceiver, wherein the first processor is further configured to generate first values of a plurality of first indicators based on the first wireless signals, to determine whether the first position corresponds to a first specific position based on the first values, and to perform an operation according to the first positioning function based on a determination that the first position corresponds to the first specific position.

According to another aspect of the inventive concepts, there is provided an operating method of a user equipment supporting a neural network-based positioning function including generating first values of a plurality of indicators based on first wireless signals received from a base station at a first position of the user equipment, determining whether the first position corresponds to a specific position based on the first values and a neural network model, the specific position included as one of a plurality of specific positions, and enabling an operation mode of the user equipment based on a determination that the first position corresponds to the specific position.

According to another aspect of the inventive concepts, there is provided a user equipment including a memory storing a neural network model trained with a plurality of training positions to support a positioning function, and a first processor configured to generate first values of a plurality of indicators based on first wireless signals received at a first position of the user equipment, and to determine whether the first position corresponds to specific position based on the first values and the neural network model, the specific position included as one of a plurality of specific positions.

At least some of the above and other features of the invention are set out in the claims.

### BRIEF DESCRIPTION OF THE DRAWINGS

Embodiments will be more clearly understood from the following detailed description taken in conjunction with the accompanying drawings in which:
FIG. 1 is a diagram illustrating a wireless communication system according to at least one embodiment;
FIG. 2 is a block diagram illustrating a user equipment according to at least one embodiment;
FIG. 3 is a diagram illustrating a structure of a neural network model of FIG. 2;
FIG. 4 is a flowchart illustrating an operating method of a user equipment, according to at least one embodiment;
FIGS. 5A and 5B are flowcharts for specifically explaining operation S100 of FIG. 4;
FIG. 6 is a table diagram for explaining specific positions and related information corresponding thereto, according to at least one embodiment;
FIGS. 7A and 7B are diagrams for explaining examples of first to third specific positions;
FIG. 8 is a table diagram for explaining types of specific positions and a positioning method corresponding thereto, according to at least one embodiment;
FIG. 9 is a flowchart illustrating an operating method of a user equipment, according to at least one embodiment;
FIGS. 10A and 10B are diagrams for specifically explaining operations S220 and S230 of FIG. 9;
FIG. 11 is a flowchart illustrating an operating method of a user equipment, according to at least one embodiment;
FIGS. 12A and 12B are diagrams for specifically explaining operation S300 of FIG. 11;
FIGS. 13A and 13B are diagrams for specifically explaining operation S300 of FIG. 11;
FIG. 14A is a flowchart illustrating an operating method of a user equipment, according to at least one embodiment, and FIG. 14B is a table diagram illustrating a specific position and a specific mode corresponding thereto, according to at least one embodiment;
FIG. 15 is a flowchart illustrating an operating method of a user equipment, according to at least one embodiment;
FIG. 16 is a block diagram illustrating a baseband processor according to at least one embodiment;
FIGS. 17A and 17B are flowcharts illustrating an operating method of a user equipment, according to at least one embodiment;
FIGS. 18A and 18B are flowcharts illustrating an operating method of a user equipment, according to at least one embodiment;
FIG. 19 is a flowchart illustrating an operating method of a user equipment, according to at least one embodiment;
FIG. 20 is a conceptual diagram illustrating an Internet of Things (IoT) network system to which embodiments are applied.

### DETAILED DESCRIPTION OF THE EMBODIMENTS

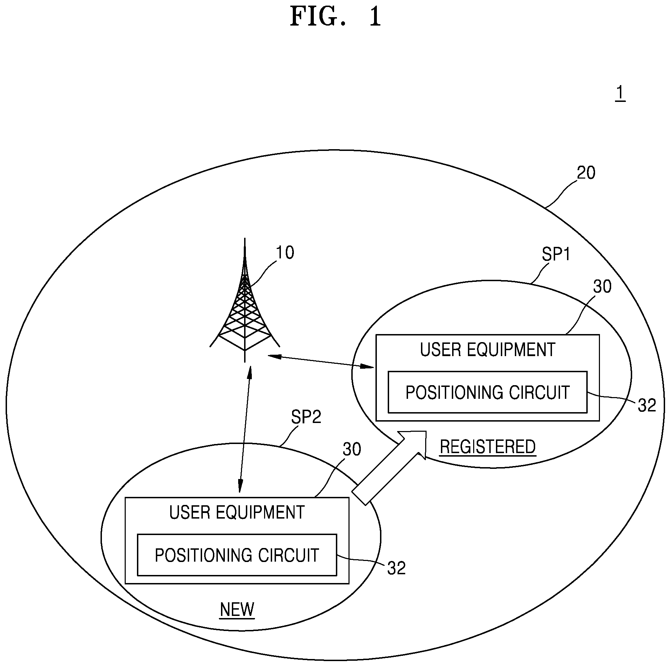

FIG. 1 is a diagram illustrating a wireless communication system 1 according to at least one embodiment. The wireless communication system 1 may provide a communication service based on at least one of a plurality of wireless networks to a user equipment 30. For example, the wireless communication system 1 may provide a communication service based on at least one of a 3rd generation (3G) network, a 4th generation (4G) network, a wireless broadband (Wibro) network, a global system for mobile communication (GSM) network, a 5th generation (5G) network, a 6th generation (6G) network, etc.

In addition, functions and/or functional elements that enable said functions may be realized by processing circuitry such as, hardware, software, or a combination of hardware and software. For example, the processing circuitry may include, but is not limited to, a central processing unit (CPU), an application processor (AP), an arithmetic logic unit (ALU), a graphic processing unit (GPU), a digital signal processor, a microcomputer, a field programmable gate array (FPGA), a System-on-Chip (SoC) a programmable logic unit, a microprocessor, or an application-specific integrated circuit (ASIC), etc. For example, various functions described below may be implemented or supported by the artificial intelligence technology and/or one or more computer programs, and each of the computer programs is composed of computer-readable program codes and is executed in a computer-readable medium. The terms "application" and "program" indicate one or more computer programs, software components, instruction sets, procedures, functions, objects, classes, instances, relevant data, or some thereof configured to be an implementation of appropriate computer-readable program codes. The term "computer-readable program codes" includes all types of computer codes including source code, object code, and execution code. The term "computer-readable medium" includes every type of medium accessible by a computer, such as read only memory (ROM), random access memory (RAM), a hard disk drive, a compact disc (CD), a digital video disc (DVD), or any other type of memory. A "non-transitory" computer-readable medium excludes transitory wired, wireless, optical, or other communication links through which electrical or other signals are transmitted. The non-transitory computer-readable medium includes a medium in which data is permanently stored and a medium in which data is stored and is overwritten by other data later, such as a rewritable optical disc or an erasable memory device.

The embodiments described below employ a hardware-based access method as an example. However, because the embodiments include a technology using both hardware and software, the embodiments do not exclude a software-based access method.

Referring to FIG. 1, the wireless communication system 1 may include a base station 10 and the user equipment 30. The base station 10 may be generally referred to as a fixed station communicating with the user equipment 30 and exchange control information and data by communicating with the user equipment 30. For example, the base station 10 may be variously referred to as a Node B, an evolved-Node B (eNB), a next generation Node B (gNB), a sector, a site, a base transceiver system (BTS), an access point (AP), a relay node, a remote radio head (RRH), a radio unit (RU), a small cell, a wireless device, a device, etc.

The user equipment 30 may refer to a device, which is stationary or has mobility and transmits and receives data and/or control information by communicating with the base station 10. For example, the user equipment 30 may be referred to as a terminal, a terminal equipment, a mobile station (MS), a mobile terminal (MT), a user terminal (UT), a subscribe station (SS), a wireless communication device, a wireless device, a device, a handheld device, etc.

The base station 10 may be connected to (e.g., communicate with) the user equipment 30 within a coverage 20 and provide a wireless network-based communication service to the user equipment 30. The user equipment 30 may move within the coverage 20 of the base station 10 and continuously communicate with the base station 10 while moving.

In at least one embodiment, the user equipment 30 may support a first positioning function to autonomously and/or actively determine the position of the user equipment 30. The first positioning function may be defined as a function for the user equipment 30 to perform position determination on the user equipment 30 independently of the base station 10. In this context, independent determination may include measurement of wireless signals from the base station 10, but need not include any active determination steps from the base station 10. For example, the term position may encompass a point, a region, or a space which may be recognized by the user equipment 30. In addition, the position determination may be interchangeably referred to as positioning. In at least one embodiment, the first positioning function may correspond to a neural network-based positioning function, and the user equipment 30 may include a neural network model trained in advance to support the first positioning function.

In at least one embodiment, the user equipment 30 may include a positioning circuit 32 configured to determine the position of the user equipment 30 according to the first positioning function. In at least one embodiment, the positioning circuit 32 may be implemented as software executed by a processor (e.g., a baseband processor) of the user equipment 30, or may be implemented as hardware within the processor of the user equipment 30. For convenience of description, embodiments are described focusing on the operation of the positioning circuit 32, and the operation of the positioning circuit 32 may be understood as the operation of the user equipment 30.

Hereinafter, at least one embodiment in which the positioning circuit 32 determines whether a first position of the user equipment 30 corresponds to a first specific position SP_1 will be described.

In at least one embodiment, the positioning circuit 32 may determine whether the first position of the user equipment 30 corresponds to the previously registered first specific position SP_1. In some embodiments, when a plurality of specific positions are registered, the positioning circuit 32 may determine whether a changed position of the user equipment 30 corresponds to one of the plurality of specific positions. For instance, the positioning circuit 32 may determine whether a current position of the user equipment 30 corresponds to one of the plurality of specific positions.

In at least one embodiment, when the user equipment 30 moves to the first position, the positioning circuit 32 may generate first values of a plurality of indicators based on first wireless signals received from the base station 10 at the first position. The positioning circuit 32 may determine that the first position corresponds to the first specific position SP_1 based on the first values. As a specific example, the positioning circuit 32 may input the first values into a neural network model and determine whether the first position corresponds to the first specific position SP_1 based on an output of the neural network model. In some embodiments, when the plurality of specific positions are registered and the first values are input to the neural network model, the output of the neural network model may be implemented to have a value corresponding to an index indicating the first specific position SP_1.

In at least one embodiment, the plurality of indicators may include indicators suitable for determining the position of the user equipment 30. For example, the plurality of indicators may include at least one of a global cell identifier (ID), a physical cell ID, a frequency band, a bandwidth, reference signal received power (RSRP), reference signal received quality (RSRQ), a received signal strength indicator (RSSI), a signal to interference plus noise ratio (SINR), the number of resource blocks, a channel quality indicator (CQI), a rank indicator (RI), a precoding matrix indicator (PMI), a modulation and coding scheme (MCS), a modulation order, a block error rate (BLER), transmission power, a Doppler frequency, and a delay spread. As an example, the user equipment 30 may selectively use some of the plurality of indicators to perform position determination. As a specific example, the user equipment 30 may perform position determination based on values of indicators related to the reception strength of wireless signals. However, this is only an example, and thus, the inventive concepts are not limited thereto, and various embodiments may be implemented, such as the user equipment 30 uses all of many indicators for position determination or intensively uses some of the many indicators.

Meanwhile, in this specification, generating values of the plurality of indicators based on wireless signals may be understood as an operation of generating values of the plurality of indicators based on baseband signals generated through frequency down-conversion of wireless signals.

In at least one embodiment, the user equipment 30 may display information (e.g. on a display of the user equipment 30) indicating that the first position of the user equipment 30 has been determined as the first specific position SP_1 to a user. In addition, in at least one embodiment, the user equipment 30 may switch from a first operation mode to a first specific mode (otherwise known as a first specific position mode) corresponding to the first specific position SP_1 and operate in the first specific mode. As an example, the first specific mode may be a preset operation mode of the user equipment 30 so that the user equipment 30 may operate efficiently at the first specific position SP_1. The first specific mode may be a preset operation mode for use at the first specific position SP_1. As an example, the first specific mode may be set to an operation mode desired by the user at the first specific position SP_1 and/or may be set to an operation mode based on usage patterns of a communication service of the user. For example, when the first specific position SP_1 is an indoor space for the user to rest, the first specific mode may be a mode in which message alarms that are not desired by the user are minimized, which may be set by the user or the user equipment 30. In at least some embodiments, the switch from the first operation mode to the first specific mode may be initiated without the user's additional input.

Hereinafter, at least one embodiment in which the positioning circuit 32 registers a second position of the user equipment 30 as a second specific position SP_2 will be described.

In at least one embodiment, the positioning circuit 32 may determine whether to register the second position of the user equipment 30 as the second specific position SP_2 which is a new specific position. In at least one embodiment, the positioning circuit 32 may determine to register the second position as the second specific position SP_2 in response to a registration request for the second position received from the user, e.g., a request to register the second position as the new specific position.

In addition, in at least one embodiment, the positioning circuit 32 may perform a monitoring operation to determine whether to register the new specific position at the second position, and register the second position as the second specific position SP_2 in response to a monitoring result satisfying an automatic registration condition. As an example, the monitoring operation of the positioning circuit 32 may include an operation of analyzing patterns of second wireless signals received by the user equipment 30 from the base station 10 at the second position and patterns of third wireless signals transmitted by the user equipment 30 to the base station 10. As an example, the automatic registration condition may be set as a condition in which a characteristic value derived from the usage patterns of the communication service of the user analyzed by the positioning circuit 32 exceeds a threshold. That is, the positioning circuit 32 may predict that the user equipment 30 is to operate in a specific mode at the corresponding position based on the automatic registration condition, and may actively register the new specific position without a registration request of the user.

In at least one embodiment, when the positioning circuit 32 determines to register the second position as the second specific position SP_2, the positioning circuit 32 may generate second values of the plurality of indicators based on the second wireless signals received from the base station 10 at the second position, and register the second specific position SP_2 based on the second values. As a specific example, the positioning circuit 32 may register the second specific position SP_2 by training the neural network model based on the second values. As an example, the neural network model may distinguish the second specific position SP_2 from other positions by extracting features of the second values and learning the features.

For example, a neural network model may be trained to extract features of the training values generated based on a plurality of training wireless signals, and identify a position based on the extracted features. Specifically, when training values are input to the neural network model, the neural network model may extract features of the training values to identify a position, and may be repeatedly trained based on whether the identified position is the same as the actual position. Meanwhile, the neural network model can be trained based on various training wireless signals corresponding to various positions, and as a result, the neural network model can extract optimal features of values of indicators for identifying positions, changes in positions, and new positions. For instance, wireless signals may be received at various positions, including the second specific position that is to be registered, and one or more other positions (e.g. that differ from the second specific position). The actual position (e.g. ground truth position) for each set of wireless signals may be associated with the corresponding set of wireless signals (e.g. based on a user input, or based on some other external input). The neural network model can then be trained to identify whether the user equipment 30 is at the second specific position by updating the neural network model (e.g. to minimize errors) by comparing the output of the neural network model to the ground truth positions.

In addition, the neural network model can also identify whether the position is indoors or outdoors by the aforementioned learning. For instance, wireless signals may be received at various positions, including indoor position(s) and outdoor position(s). The actual (e.g. ground truth) classification or position (e.g. indoors or outdoors) for each set of wireless signals may be associated with the corresponding set of wireless signals (e.g. based on a user input, or based on some other external input). The neural network model can then be trained to identify whether the user equipment 30 is indoors or outdoors by updating the neural network model (e.g. to minimize errors) by comparing the output of the neural network model to the ground truth classification or position.

In at least one embodiment, the positioning circuit 32 may provide appropriate guide information to the user through a user interface, for receiving sufficient second wireless signals to accurately register the second specific position SP_2. In some embodiments, the guide information may vary depending on type information of the second specific position SP_2.

Since a position is a region rather than a single point, receiving various wireless signals while moving around the region can increase the accuracy of position identification. Therefore, the guide information may include information that instructs the user to change the position of the user equipment and/or the extent of the change. This guide information can be used to determine the ground truth location for use in training the neural network model.

The plurality of specific positions may be registered to the user equipment 30 based on registration methods of the second specific position SP_2 described above.

Meanwhile, in at least one embodiment, the positioning circuit 32 may determine that the user equipment 30 is at the first specific position SP_1 and then generate third values of the plurality of indicators based on the third wireless signals received from the base station 10, and determine whether the user equipment 30 has left the first specific position SP_1 based on the third values. As a specific example, the positioning circuit 32 may input the third values to the neural network model and determine whether the user equipment 30 has left the first specific position SP_1 based on the output of the neural network model. As an example, when the positioning circuit 32 determines that the user equipment 30 has left the first specific position SP_1, an operating mode of the user equipment 30 may be restored to an operating mode before the first specific mode.

In at least one embodiment, the user equipment 30 may further support a second positioning function along with the first positioning function. That is, the user equipment 30 may support heterogeneous positioning functions. As an example, the user equipment 30 may support a global navigation satellite system (GNSS)-based positioning function (or a global positioning system (GPS)-based positioning function) as the second positioning function. In at least one embodiment, the user equipment 30 may selectively activate one of the first positioning function and the second positioning function based on a current communication environment. As a specific example, the user equipment 30 may activate the first positioning function and deactivate the second positioning function when the current communication environment corresponds to an indoor communication environment. In addition, the user equipment 30 may activate the second positioning function when the current communication environment corresponds to an outdoor communication environment. In some embodiments, the user equipment 30 may activate both the first positioning function and the second positioning function, and may precisely determine the position of the user equipment 30 by using the first positioning function and the second positioning function complementarily.

In at least one embodiment, the user equipment 30 may support an operation of performing position determination of the user equipment 30 based on the base station 10 along with the first positioning function. As an example, the user equipment 30 may receive positioning reference signals (PRSs) from a plurality of base stations including the base station 10, measure reception time differences between the PRSs, and generate reference signal time difference (RSTD) information. The user equipment 30 may provide the RSTD information to the base station 10, and the base station 10 may determine the position of the user equipment 30 based on the RSTD information. In some embodiments, the user equipment 30 may calibrate the RSTD information by using the first positioning function and then transmit the calibrated RSTD information to the base station 10. As a specific example, when it is determined by the positioning circuit 32 that the user equipment 30 is currently at the first specific position SP_1, the user equipment 30 may calibrate the RSTD information based on the first specific position SP_1.

The user equipment 30 according to at least one embodiment may support the first positioning function for position determination independently of the base station 10 or a system for position determination (e.g., the GNSS or the GPS), and complement the limitations of position determination by the base station 10 and position determination by the system, thereby accurately performing position determination on the user equipment 30 moving to various positions.

The user equipment 30 according to at least one embodiment does not require additional wireless signals for position determination, and may perform position determination by using only wireless signals received for communication with the base station 10, thereby minimizing the consumption of wireless resources.

In addition, the user equipment 30 according to at least one embodiment may perform position determination by using the neural network model and registering a new specific position by training the neural network model, thereby improving the accuracy of position determination.

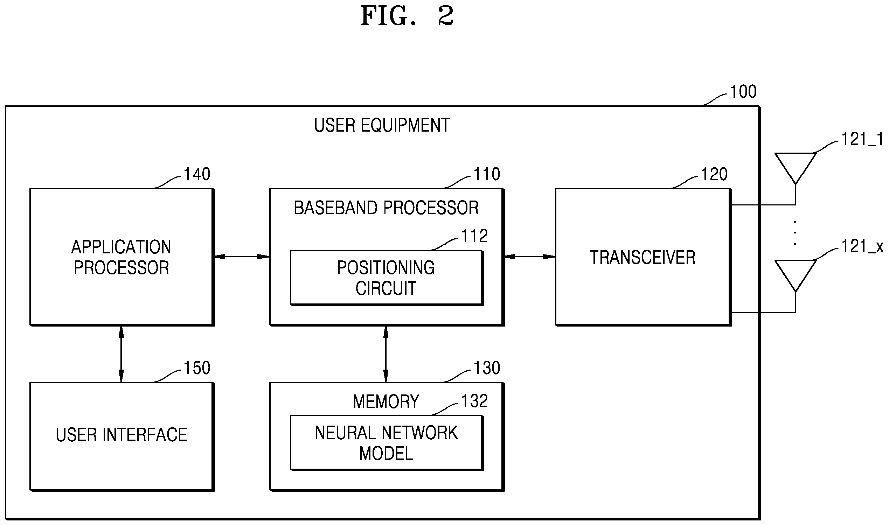

FIG. 2 is a block diagram illustrating a user equipment 100 according to at least one embodiment.

Referring to FIG. 2, the user equipment 100 may include a baseband processor 110, a transceiver 120, a memory 130, an application processor 140, a user interface 150, and a plurality of antennas 121_1 to 121_x. The baseband processor 110 may also be referred to as a first processor, and the application processor 140 may also be referred to as a second processor. Meanwhile, in FIG. 2, the baseband processor 110 and the application processor 140 are shown as separate components, but this is only an example and the inventive concepts are not limited thereto, and the baseband processor 110 and the application processor 140 may be integrated, or the baseband processor 110 and the application processor 140 may perform position determination according to the inventive concepts in conjunction with each other.

The transceiver 120 may be configured to receive and/or transmit wireless signals transmitted from and/or to a base station, through the plurality of antennas 121_1 to 121_x. The transceiver 120 may down-convert the received wireless signals to generate intermediate frequency signals and/or baseband signals. The baseband processor 110 may acquire data by performing a processing operation of filtering, decoding, and/or digitizing the intermediate frequency signals or the baseband signals and generate data for communication with the base station based on the acquired data.

In addition, the baseband processor 110 may encode, multiplex, and/or perform digital to analog conversion on the generated data to provide the intermediate frequency signals or the baseband signals to the transceiver 120. The transceiver 120 may frequency-up-convert the intermediate frequency signals or the baseband signals to transmit wireless signals to the base station through the plurality of antennas 121_1 to 121_x.

In at least one embodiment, the baseband processor 110 may include a positioning circuit 112, and the memory 130 may store a neural network model 132 for supporting a first positioning function. As an example, the neural network model 132 may be executed by the baseband processor 110 and used to perform position determination on the user equipment 100. Below, for convenience of description, the operation of the positioning circuit 112 is mainly described, but the operation of the positioning circuit 112 may be understood as the operation of the baseband processor 110, and further, the operation of the user equipment 100.

In at least one embodiment, the positioning circuit 112 may be configured to generate values of a plurality of indicators based on wireless signals received from a base station, perform training on the neural network model 132 based on the generated values, and register a plurality of specific positions to the neural network model 132. In addition, in at least one embodiment, the positioning circuit 112 may determine whether the current position of the user equipment 100 corresponds to one of the plurality of specific positions by using the neural network model 132.

In at least one embodiment, the application processor 140 may execute an application associated with the position determination of the positioning circuit 112 to perform an operation of controlling the position determination of the positioning circuit 112.

In at least one embodiment, the application processor 140 may be configured to transmit a registration request for a new specific position received from a user to the positioning circuit 112 through the user interface 150. At this time, the positioning circuit 112 may determine to register the current position of the user equipment 100 as the new specific position in response to the registration request for the new specific position. In at least one embodiment, the application processor 140 may transmit type information of the new specific position received along with the registration request for the new specific position to the positioning circuit 112 through the user interface 150. That is, the user may wish to register the new specific position as one of a plurality of types, and the type information may indicate the type desired by the user. As an example, the type information may include information indicating whether the new specific position corresponds to one of a specific floor and a specific region. As a specific example, the amount of wireless signals that need to be received for registration of the specific position corresponding to the specific floor may be greater than the amount of wireless signals that need to be received for registration of the specific position corresponding to the specific region. The positioning circuit 112 may generate guide information based on the type information of the new specific position and transmit the guide information to the application processor 140 to sufficiently receive wireless signals for the position determination of the user equipment 100. The application processor 140 may display the guide information to the user through the user interface 150.

In at least one embodiment, the application processor 140 may be configured to receive information about the specific position determined by the positioning circuit 112 to correspond to the current position of the user equipment 100 from the positioning circuit 112, and control an operation mode of the user equipment 100 based on the information. As an example, the operation mode of the user equipment 100 may include a plurality of specific modes, and the user equipment 100 may control the operation mode to a specific mode corresponding to the determined specific position among the plurality of specific modes. As an example, one of the plurality of specific modes may be a ready-made mode supported by the application processor 140. As an example, one of the plurality of specific modes may be a mode set by the user.

In at least one embodiment, the application processor 140 may be configured to enable the display of the information indicating the specific position determined to correspond to the current position of the user equipment 100 to the user through the user interface 150. In at least one embodiment, the application processor 140 may display information indicating that the user equipment 100 operates based on the specific mode corresponding to the determined specific position. In some embodiments, the application processor 140 may inform the user of this through the user interface 150 before controlling the user equipment 100 to operate based on the specific mode corresponding to the determined specific position.

In at least one embodiment, the neural network model 132 may employ one or more neural network (NN) architectures among a multilayer perceptron (MLP) architecture, a convolutional neural network (CNN) architecture, a region with convolution neural network (R-CNN) architecture, a region proposal network (RPN) architecture, a recurrent neural network (RNN) architecture, a stacking-based deep neural network (S-DNN) architecture, a state-space dynamic neural network (S-SDNN) architecture, a deconvolution network architecture, a deep belief network (DBN) architecture, a restricted Boltzmann machine (RBM) architecture, a fully convolution network architecture, a classification network architecture, a plain residual network architecture, a dense network architecture, a hierarchical pyramid network architecture, a transformer architecture, a long short-term memory (LSTM) architecture, etc.

In at least one embodiment, the neural network model 132 may be trained based on various values of the plurality of indicators generated by the positioning circuit 112 at a plurality of positions of the user equipment 100 to accurately identify the plurality of specific positions. In this specification, identifying the specific position through the neural network model 132 may be understood as the specific position being registered.

In addition, in at least one embodiment, the neural network model 132 may be updated based on the values of the plurality of indicators generated by the positioning circuit 112 at the plurality of registered specific positions of the user equipment 100 so as to more accurately and quickly identify the plurality of registered specific positions. For example, the neural network model 132 may be updated to include new specific positions and/or to compensate for changes to existing specific positions.

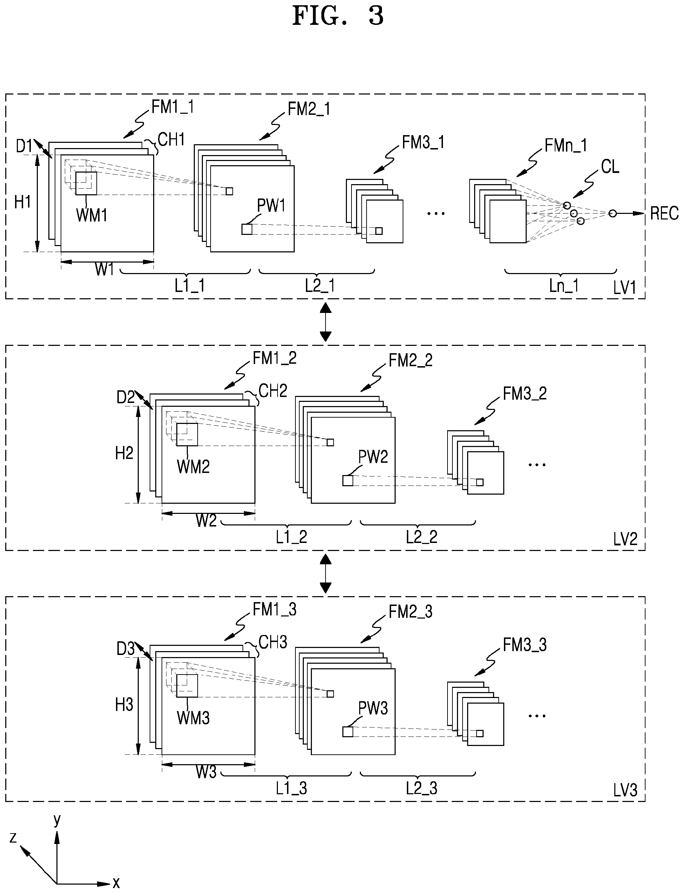

FIG. 3 is a diagram illustrating a structure of the neural network model 132 of FIG. 2. The neural network model 132 may be used to determine whether a position of the user equipment 100 described above corresponds to a specific position, and may be effectively trained so as to identify the specific position based on a structure to be described below.

Referring to FIG. 3, the neural network model 132 may include a plurality of levels, e.g., first to third levels LV1 to LV3. However, the inventive concepts are not necessarily limited thereto, and the neural network model 132 may be composed of only one level or two or more levels. Hereinafter, the first level LV1 is described, but this may also be applied in substantially the same manner to the other levels included in the neural network model 132. In addition, in accordance with circumstances, some of layers in the first level LV1 of the neural network model 132 may be omitted or other layers may be added to the layers in the first level LV1.

The first level LV1 may include a plurality of layers, e.g., first to nth layers L1_1 to Ln_1 (wherein 'n' is an integer). The neural network model 132 of such a multi-layered architecture may be referred to as a deep neural network (DNN) or a deep learning architecture. Each of the first to nth layers L1_1 to Ln_1 may be a linear layer or a nonlinear layer, and in some embodiments, at least one linear layer and at least one nonlinear layer may be combined as one layer. For example, a linear layer may include a convolution layer or a fully connected layer, and a nonlinear layer may include a pooling layer or an activation layer.

For example, the first layer L1_1 may be a convolution layer, the second layer L2_1 may be a pooling layer, and the nth layer Ln_1 may be a fully connected layer as an output layer. The neural network model 132 may further include an activation layer and a layer that performs another type of calculation.

Each of the first to nth layers L1_1 to Ln_1 may receive, as an input feature map, input data or a feature map generated in a previous layer and perform calculation(s) on the input feature map to generate an output feature map. In this regard, the feature map indicates data representing various features of input data. First to nth feature maps FM1_1 to FMn_1 may each have, for example, a two-dimensional (2D) matrix form, a three-dimensional (3D) matrix (otherwise referred to as 3^{rd} order tensor) form including a plurality of feature values. More generally, the first to nth features maps FM1_1 to FMn_1 may each have a tensor form including a plurality of feature values. The first to nth feature maps FM1_1 to FMn_1 may each have a width W1 (otherwise referred to as a number of columns), a height H1 (otherwise referred to as a number of rows), and a depth D1, which correspond to the x-axis, the y-axis, and the z-axis on a coordinate system, respectively. In this regard, the depth D1 may be referred to as the number of channels CH1. FIG. 3 shows three channels CH1, CH2, and CH3, but the inventive concepts are not necessarily limited thereto, and the neural network model 132 may have one or more channels.

The first layer L1_1 may generate the second feature map FM2_1 by convoluting the first feature map FM1_1 with a weight map WM1. The weight map WM1 may have a 2D matrix form or 3D matrix form (more generally, a tensor form) including a plurality of weight values. The weight map WM1 may be referred to as a kernel. The weight map WM1 may perform filtering on the first feature map FM1_1 and be referred to as a filter or a kernel. The same channels of the weight map WM1 and the first feature map FM1_1 may be convoluted with each other. The weight map WM1 may be shifted as a sliding window in a manner of crossing the first feature map FM1_1. For each shift, the weights included in the weight map WM1 may be multiplied by all feature values in a region overlapping the first feature map FM1_1, respectively, and then added. When the first feature map FM1_1 and the weight map WM1 are convoluted with each other, one channel of the second feature map FM2_1 may be generated. Although FIG. 3 shows one weight map WM1, a plurality of weight maps are substantially convoluted with the first feature map FM1_1, and thus, a plurality of channels of the second feature map FM2_1 may be generated. In other words, the number of channels of the second feature map FM2_1 may correspond to the number of weight maps.

The second layer L2_1 may generate the third feature map FM3_1 by changing the spatial size of the second feature map FM2_1 through pooling. Pooling may be referred to as sampling or down-sampling. A 2D pooling window PW1 may be shifted on the second feature map FM2_1 by a unit of the size of the pooling window PW1, and the maximum value (or the mean value) of feature values in a region overlapping the pooling window PW1 may be selected. Accordingly, the third feature map FM3_1 may be generated by changing the spatial size of the second feature map FM2_1. The number of channels of the third feature map FM3_1 may be the same as the number of channels of the second feature map FM2_1. The nth layer Ln_1 may classify a class CL of the input data by combining the features of the nth feature map FMn_1. In addition, the nth layer Ln_1 may generate a recognition signal REC corresponding to the class CL. The nth layer Ln_1 may be omitted in accordance with circumstances.

The neural network model 132 may include one level but may include a plurality of levels. Each of the plurality of levels may receive, as an input feature map, a feature map generated from data input to the level and perform calculation(s) on the input feature map to generate an output feature map or the recognition signal REC. As an example, the first level LV1 may receive, as the input feature map, a feature map generated from the input data. The first layer L1_1 may receive the first feature map FM1_1 generated from the input data. The second level LV2 may receive, as the input feature map, a feature map generated from first reconstructed data. The first layer L1_2 of the second level LV2 may receive the first feature map FM2_1 generated from the first reconstructed data. The third level LV3 may receive, as the input feature map, a feature map generated from second reconstructed data. The first layer L3_1 of the third level LV3 may receive the first feature map FM3_1 generated from the second reconstructed data. The unit of the first reconstructed data may differ from the unit of the second reconstructed data. Widths W1, W2, and W3, heights H1, H2, and H3, and depths D1, D2, and D3 of the first feature maps FM1_1, FM2_1, FM3_1 may differ from each other.

For example, the reconstruction data may correspond to data processed based on weighting factors as input data of a neural network model.

The plurality of levels may be organically connected to each other. In at least one embodiment, feature maps output from layers included in each of the plurality of levels may be organically connected to feature maps of different levels. For example, the neural network model 132 may perform calculation to extract the features of the third feature map FM3_1 of the first level LV1 and the first feature map FM1_2 of the second level LV2 and generate a new feature map. In at least one embodiment, the nth layer Ln_1 may exist only in one level and combine the features of the feature maps of the plurality of levels to classify the class CL of the input data.

In at least one embodiment, the configuration including layers of the neural network model 132, the number of feature maps, and a combination of feature maps may be determined to effectively identify a specific position. As an example, the neural network model 132 may determine, for each potential class (e.g. each potential specific position), a probability of the input data falling into that class (e.g. the probability of the user equipment being located at the corresponding specific position). The neural network model 132 may identify the class (e.g. specific position) having the highest probability as the class CL of the input data. Having said this, alternative methods of classification are possible.

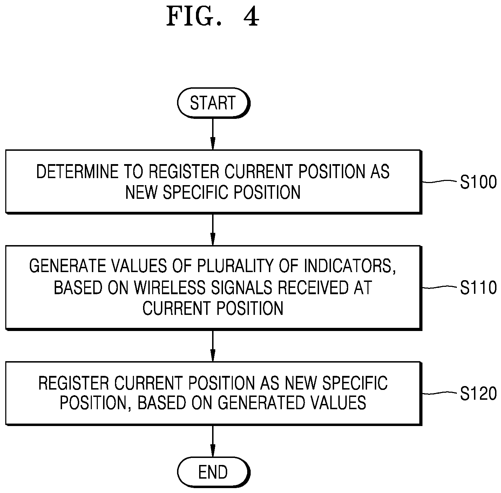

FIG. 4 is a flowchart illustrating an operating method of a user equipment, according to at least one embodiment. The operation of the user equipment in FIG. 4 may also be understood as the operation of a positioning circuit or the operation of a baseband processor. For example, the neural network model 132 may be configured to receive data about first wireless signals input and/or first values of a plurality of indicators based on the first wireless signals. The positioning circuit 32 may be configured to, based on an output of the neural network model 132, determine the position of the user equipment and/or whether the user equipment is at a specific position.

Referring to FIG. 4, in operation S100, the user equipment may determine to register the current position of the user equipment as a new specific position. For example, the determination may be based on a user input, a monitoring operation of the positioning circuit 32, an automatic registration condition, a position specific policy, law, and/or ordinance, etc.

In operation S110, the user equipment may generate values of a plurality of indicators based on wireless signals received from a base station at the current position.

In operation S 120, the user equipment may register the current position as a new specific position based on the values generated in operation S110.

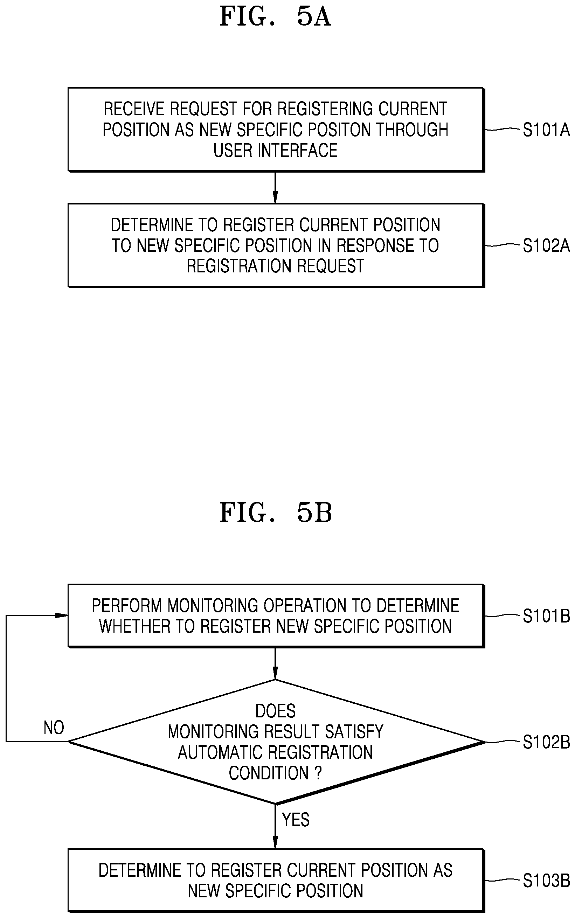

FIGS. 5A and 5B are flowcharts for specifically explaining operation S100 of FIG. 4.

Referring to FIG. 5A, in operation S101A, the user equipment may receive a request for registering the current position of the user equipment to a new specific position from a user through a user interface.

In operation S102A, the user equipment may determine to register the current position of the user equipment to the new specific position in response to the registration request received in operation S101A.

As described above, the user equipment may determine to register the current position of the user equipment desired by the user as the new specific position in response to the registration request of the user.

Referring to FIG. 5B, in operation S101B, the user equipment may perform a monitoring operation to determine whether to register the new specific position. In at least one embodiment, the user equipment may be at various positions due to movement, and may perform a monitoring operation to analyze patterns of wireless signals transmitted to and received from a base station periodically or periodically at various positions.

In operation S102B, the user equipment may determine whether a monitoring result of operation S101B satisfies an automatic registration condition. In at least one embodiment, the automatic registration condition may be set based on at least one of common characteristics between specific positions to which registration is requested by the user, information received from the user, and usage patterns of a communication service of the user. That is, the automatic registration condition may be set to predict that the user will want the user equipment 30 to operate in a specific mode at an arbitrary position and actively register the new specific position without the registration request of the user.

When operation S102B is `YES', operation S103B follows, where the user equipment may determine to register the current position of the user equipment to the new specific position. In at least some embodiments, though not illustrated, the user equipment may monitor the location of the user equipment to determine whether the user equipment has moved and operation S101B may follow based on a determination that the user equipment has moved beyond a minimum preset distance.

When operation S102B is 'NO', operation S101B may follow. In at least some embodiments, a pause may occur between operations when S101B is 'NO' and the following operation S101B. For example, though not illustrated, the user equipment may monitor the location of the user equipment to determine whether the user equipment has moved and operation S101B may follow based on a determination that the user equipment has moved beyond a minimum preset distance.

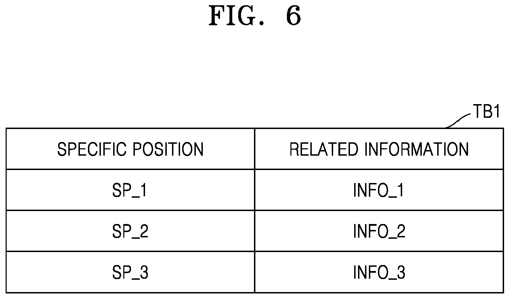

FIG. 6 is a table diagram for explaining specific positions and related information corresponding thereto according to at least one embodiment.

Referring to a first table TB1 in FIG. 6, a user equipment may register the first to third specific positions SP_1, SP_2, and SP_3 and provide first to third related information INFO_1, INFO_2, and INFO_3 corresponding thereto.

In at least one embodiment, the first specific position SP_1 may correspond to the first related information INFO_1, and the first related information INFO_1 may include at least one of an index indicating the first specific position SP_1 and type information indicating a type of the first specific position SP_1.

In at least one embodiment, the second specific position SP_2 may correspond to the second related information INFO_2, and the second related information INFO_2 may include at least one of an index indicating the second specific position SP_2 and type information indicating a type of the second specific position SP_2.

In addition, in at least one embodiment, the third specific position SP_3 may correspond to the third related information INFO_3, and the third related information INFO_3 may include at least one of an index indicating the third specific position SP_3 and type information indicating a type of the third specific position SP_3.

In at least one embodiment, an index included in related information may be information for identifying a specific position indicated by an output of a neural network model. In at least one embodiment, type information included in the related information may be information necessary to determine whether the current position of the user equipment corresponds to a specific position.

In some embodiments, the related information may further include various information necessary for the user equipment to determine whether the current position corresponds to one of the first to third specific positions SP_1, SP_2, and SP_3.

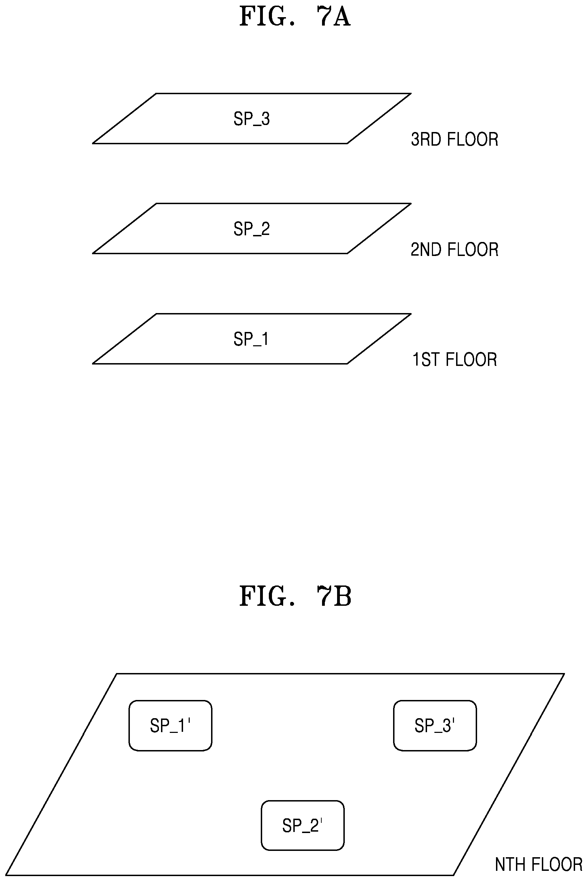

FIGS. 7A and 7B are diagrams for explaining examples of first to third specific positions SP_1, SP_2, and SP_3.

Referring to FIG. 7A, the first to third specific positions SP_1, SP_2, and SP_3 may correspond to first to third specific floors, respectively. That is, a user equipment may register specific floors within a specific building as specific positions.

As an example, when the user equipment is located on the first specific floor, it may be determined that the user equipment is located at a first specific position SP_1 based on first values of a plurality of first indicators generated from wireless signals received at the first specific floor. When the user equipment is located on the second specific floor, it may be determined that the user equipment is at the second specific position SP_2 based on second values of the plurality of first indicators generated from wireless signals received at the second specific floor. In addition, when the user equipment is located on the third specific floor, it may be determined that the user equipment is at the third specific position SP_3 based on third values of the plurality of first indicators generated from wireless signals received at the third specific floor. In at least some embodiments, triangulation may be used to determine the location of the user equipment. For example, the user equipment 30 may receive signals from a plurality of base stations 10 and may determine the position based on the signals. For example, in at least some embodiments, the location may be determined based on a relative position to two, three or more of the plurality of base stations 10.

Referring further to FIG. 7B, first to third specific positions SP_1', SP_2', and SP_3' may respectively correspond to first to third specific regions of an Nth floor. That is, the user equipment may register specific regions on the same floor within a specific building as specific positions.

As an example, when the user equipment is located in the first specific region, it may be determined that the user equipment is at the first specific position SP _1' based on first values of a plurality of second indicators generated from wireless signals received in the first specific region. When the user equipment is located in the second specific region, it may be determined that the user equipment is at the second specific position SP_2' based on second values of the plurality of second indicators generated from wireless signals received in the second specific region. In addition, when the user equipment is located in the third specific region, it may be determined that the user equipment is at the third specific position SP_3 ' based on third values of the plurality of second indicators generated from wireless signals received in the third specific region.

In at least one embodiment, at least one of the first indicators in FIG. 7A may be different from at least one of the second indicators in FIG. 7B. That is, at least one of the first indicators necessary for determining a specific position corresponding to a specific floor may be different from at least one of the second indicators necessary for determining a specific position corresponding to a specific region.

However, this is only an example, and the inventive concepts are not limited thereto, and the first indicators and the second indicators may be the same.

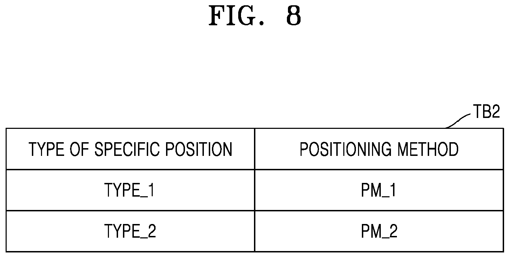

FIG. 8 is a table diagram for explaining types of specific positions and a positioning method corresponding thereto according to at least one embodiment.

Referring to a second table TB2 in FIG. 8, a user equipment may classify a type of a specific position as one of first and second types TYPE_1 and TYPE_2, and perform positioning in first and second positioning methods PM_1 and PM_2 corresponding thereto.

As at least one embodiment, the first type TYPE_1 may indicate a type of a specific floor described with reference to FIG. 7A, and the second type TYPE 2 may indicate a type of a specific region described with reference to FIG. 7B.

In at least one embodiment, the positioning method may be related to at least one of the configurations of guide information provided to a user and the configuration of indicators necessary for determining a specific position.

In at least one embodiment, the first positioning method PM_1 may indicate at least one of guide information provided to the user to register a specific position corresponding to the first type TYPE_1 and first indicators necessary for determining the specific position corresponding to the first type TYPE_1.

In at least one embodiment, the second positioning method PM_2 may indicate at least one of a guide information provided to the user to register a specific position corresponding to the second type TYPE_2 and second indicators necessary for determining the specific position corresponding to the second type TYPE_2.

However, this is only an example, and thus, the inventive concepts are not limited thereto, and the user equipment may classify a specific position into more types and perform a positioning operation appropriate for each type, or perform a general positioning operation without classifying the specific position into types.

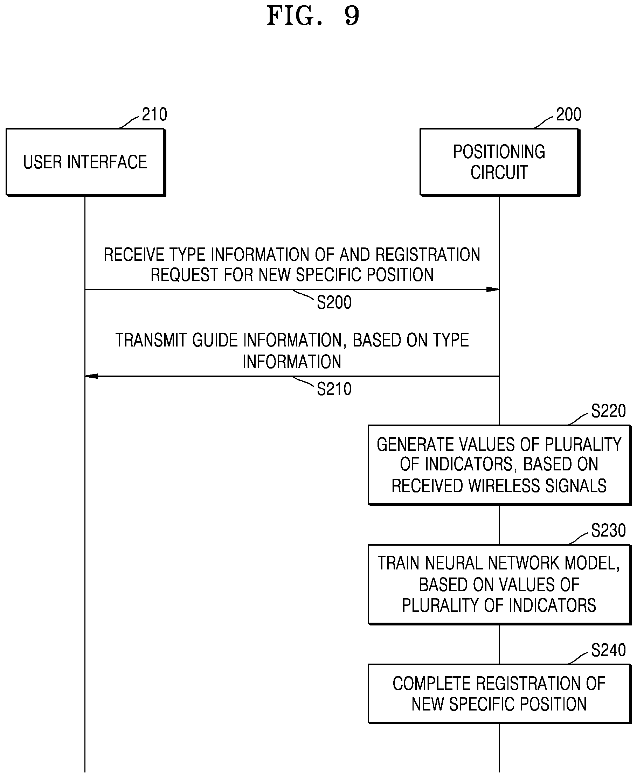

FIG. 9 is a flowchart illustrating an operating method of a user equipment, according to at least one embodiment. The user equipment in FIG. 9 may include a positioning circuit 200 and a user interface 210. FIG. 9 illustrates a direct signaling operation between the positioning circuit 200 and the user interface 210, but this is for convenience of description, and an application processor for signaling between the positioning circuit 200 and the user interface 210 may perform a certain operation.

Referring to FIG. 9, in operation S200, the positioning circuit 200 may receive type information of and a registration request for a new specific position from a user through the user interface 210. As a specific example, the positioning circuit 200 may receive the registration request requesting to register the current position as the new specific position and the type information indicating the desired type from the user through the user interface 210.

In operation S210, the positioning circuit 200 may transmit guide information to the user interface 210 based on the type information received in operation S200. As a specific example, the guide information may be provided to the user to receive wireless signals sufficient for registering the current position of the user equipment as the new specific position of the type desired by the user. As an example, the user may act according to the guide information displayed through the user interface 210.

However, the reception of type information and the transmission of guide information in operations S200 and S210 are only examples, and thus, the inventive concepts are not limited thereto, and the reception of type information and the transmission of guide information may be omitted. That is, the positioning circuit 200 may immediately perform operations S220 to S240 in response to the registration request for the new specific position received through the user interface 210.

In at least one embodiment, the positioning circuit 200 may determine to register the current position of the user equipment as the new specific position in response to the registration request received in operation S200 and perform operations S220 to S240.

In at least one embodiment, in operation S220, the positioning circuit 200 may generate values of a plurality of indicators based on wireless signals received at the current position.

In at least one embodiment, in operation S230, the positioning circuit 200 may train a neural network model based on the values of the plurality of indicators. As an example, the positioning circuit 200 may train the neural network model by inputting the values of the plurality of indicators to the neural network model and extracting characteristics of the input values from the neural network model to identify the characteristics as the new specific position.

In at least one embodiment, in operation S240, the positioning circuit 200 may complete registration of the new specific position when training in operation S230 is completed.

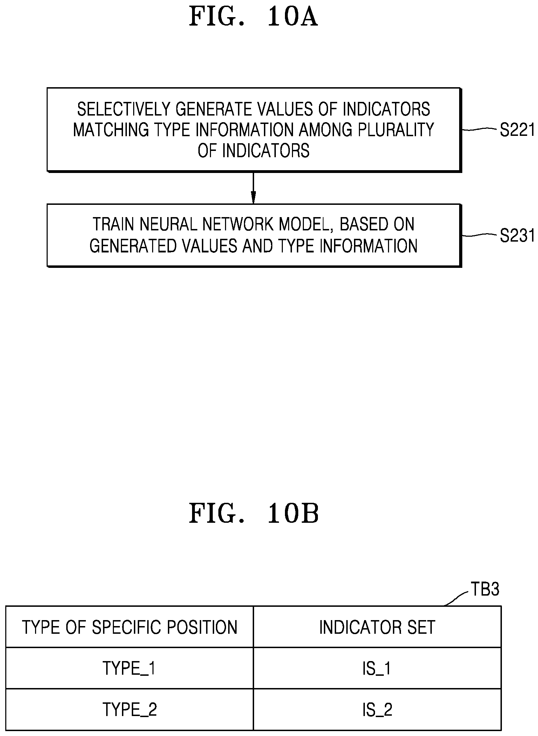

FIGS. 10A and 10B are diagrams for specifically explaining operations S220 and S230 of FIG. 9.

Referring to FIG. 10A, in operation S221, the positioning circuit 200 may selectively generate values of indicators matching type information among a plurality of indicators. As an example, when the type information indicates a type corresponding to a specific floor, the positioning circuit 200 may selectively generate values of first indicators among the plurality of indicators. In addition, when the type information indicates a type corresponding to a specific region, the positioning circuit 200 may selectively generate values of second indicators among the plurality of indicators.

In operation S231, the positioning circuit 200 may train a neural network model based on the values and the type information generated in operation S221. As an example, a calculation method for training the neural network model may also vary depending on a type of a new specific position.

Referring further to a third table TB3 in FIG. 10B, the user equipment may classify the type of a specific position as one of the first and second types TYPE 1 and TYPE_2, and perform positioning by using first and second indicator sets IS_1 and IS_2 corresponding thereto.

In at least one embodiment, the first type TYPE_1 may indicate a type of a specific floor described with reference to FIG. 7A, and the second type TYPE 2 may indicate a type of a specific region described with reference to FIG. 7B.

In at least one embodiment, the first indicator set IS_1 may include first indicators necessary for registering a specific position type of the first type TYPE_1 or determining a specific position of the first type TYPE_1.

In at least one embodiment, the second indicator set IS_2 may include second indicators necessary for registering a specific position type of the second type TYPE_2 or determining a specific position of the second type TYPE_2.

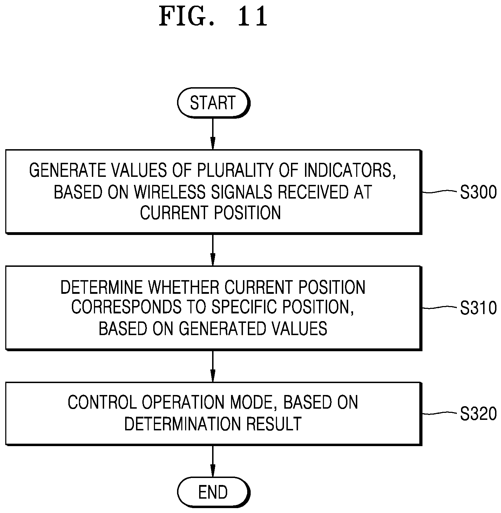

FIG. 11 is a flowchart illustrating an operating method of a user equipment, according to at least one embodiment. In the operation of the user equipment of FIG. 11, operations S300 and S310 may be understood as the operation of a positioning circuit or the operation of a baseband processor, and operation S320 may be understood as the operation of an application processor.

Referring to FIG. 11, in operation S300, the user equipment may generate values of a plurality of indicators based on wireless signals received at the current position of the user equipment.

In operation S310, the user equipment may determine whether the current position corresponds to a specific position based on the values generated in operation S300. In addition, when a plurality of specific positions are registered to the user equipment, the user equipment may determine whether the current position corresponds to one of the plurality of specific positions based on the generated values.

In operation S320, the user equipment may control an operation mode of the user equipment based on a determination result of operation S310. As an example, when the user equipment determines that the current position corresponds to a specific position, the user equipment may control the operation mode so that the user equipment operates in a specific mode corresponding to the specific position. In other words, the user equipment may switch from a previous operation mode to the specific mode.

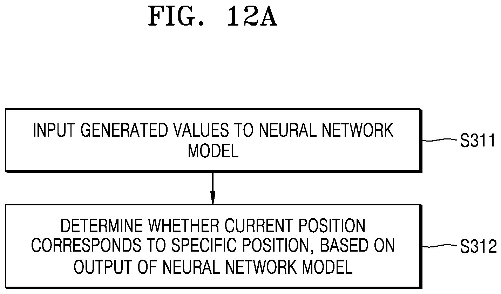

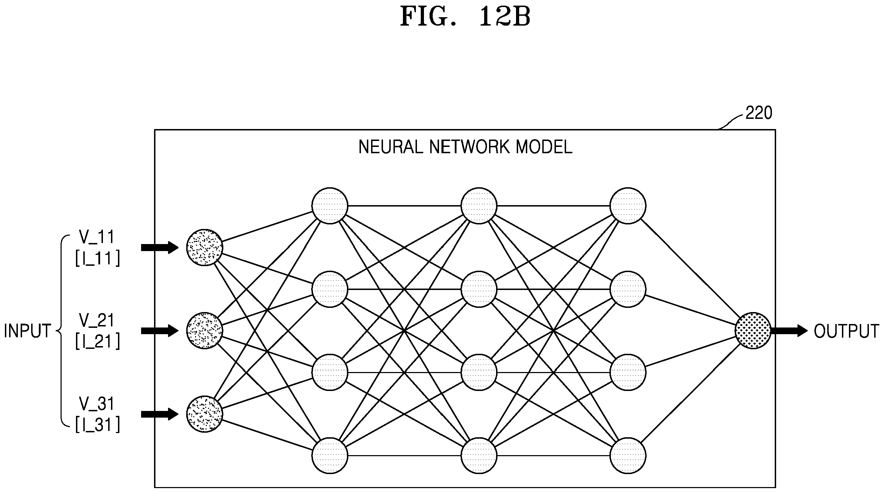

FIGS. 12A and 12B are diagrams for specifically explaining operation S300 of FIG. 11.

Referring to FIG. 12A, in operation S311, a user equipment may input the generated values to a neural network model.

In operation S312, the user equipment may determine whether the current position corresponds to a specific position based on an output of the neural network model and/or satisfies an automatic registration condition. As an example, when the output of the neural network model has a value corresponding to the index of the specific position, the user equipment may determine that the current position corresponds to the specific position. In addition, as an example, when a plurality of specific positions are registered to the user equipment, the output of the neural network model may have a value corresponding to one of indices of the plurality of specific positions, and based on the value, the user equipment may determine the specific position corresponding to the current position among the plurality of specific positions.

Referring further to FIG. 12B, data including values V_11, V_21, and V_31 of three indicators I_11, 1_21, and I_31 may be input to a neural network model 220 trained for position determination on the current position of the user equipment. The neural network model 220 may perform a neural network-based calculation based on the input and output data indicating whether the current position corresponds to the specific position. In at least one embodiment, the three indicators 1_11, 1_21, and I_31 may be indicators suitable for position determination on the user equipment.

However, the embodiment of the neural network model 220 of FIG. 12B is only an example, and thus, the inventive concepts are not limited thereto, and values of more or fewer indicators may be input.

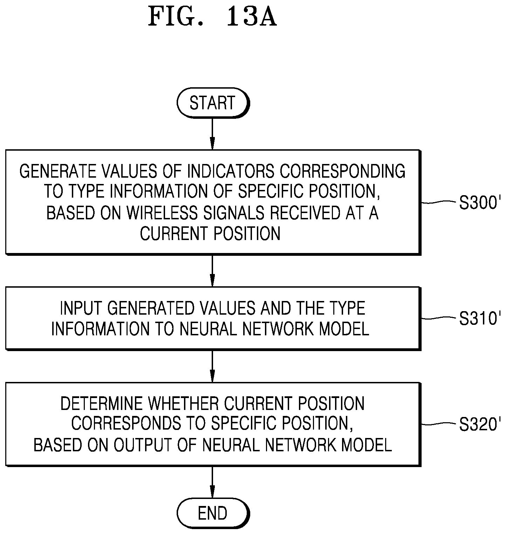

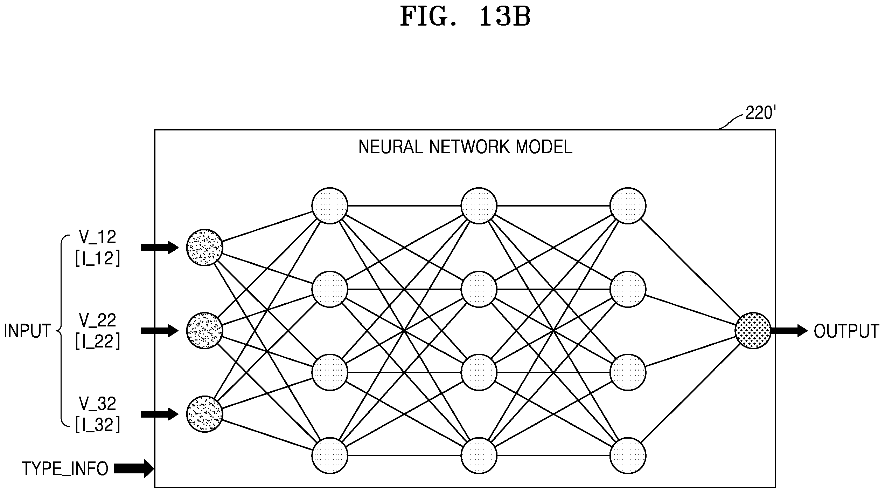

FIGS. 13A and 13B are diagrams for specifically explaining operation S300 of FIG. 11.

Referring to FIG. 13A, in operation S300', a user equipment may generate values of indicators corresponding to type information of a specific position based on wireless signals received at the current position. As an example, the user equipment may confirm a type of the specific position based on the type information of the specific position and then selectively generate values of indicators suitable for determining the specific position.

In operation S310', the user equipment may input the values and the type information generated in operation S300' to a neural network model. As an example, the neural network model may identify values which are input based on the type information, and further, may perform neural network calculation by using a calculation method corresponding to the type information.

In operation S320', the user equipment may determine whether the current position corresponds to the specific position based on the output of the neural network model.

Referring further to FIG. 13B, data including values V_12, V_22, and V_32 of three indicators I_12, I_22, and I_32 and type information TYPE_INFO of the specific position may be input to a neural network model 220' trained for position determination on the current position of the user equipment. The neural network model 220' may perform a neural network-based calculation based on an input and the type information TYPE_INFO and output data indicating whether the current position corresponds to a specific position.

However, the embodiment of the neural network model 220' in FIG. 13B is only an example, and thus, the inventive concepts are not limited thereto, and values of more or fewer indicators may be input.

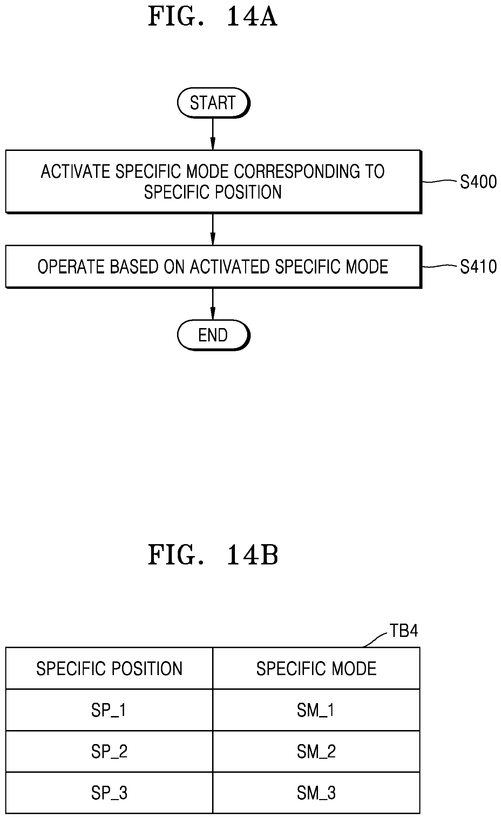

FIG. 14A is a flowchart illustrating an operating method of a user equipment according to at least one embodiment, and FIG. 14B is a table diagram illustrating a specific position and a specific mode corresponding thereto according to at least one embodiment. The operation of the user equipment in FIG. 14A may be understood as the operation of an application processor.

Referring to FIG. 14A, in operation S400, the user equipment may activate a specific mode corresponding to the specific position determined to correspond to the current position of the user equipment. For example, the user equipment may confirm the specific mode corresponding to the determined specific position, and then switch a previous operation mode to the specific mode by deactivating the previous operation mode and activating the confirmed specific mode.

In operation S410, the user equipment may operate based on the specific mode activated in operation S400.

Referring further to a fourth table TB4 of FIG. 14B, specific positions registered in the user equipment may include the first to third specific positions SP_1, SP_2, and SP_3. A first specific mode SM_1 may correspond to the first specific position SP_1, a second specific mode SM_2 may correspond to the second specific position SP_2, and a third specific mode SM_3 may correspond to the third specific position SP_3.

In at least one embodiment, at least one of the first to third specific modes SM_1, SM_2, and SM_3 may be a ready-made mode supported by the user equipment. In at least one embodiment, at least one of the first to third specific modes SM_1, SM_2, and SM_3 may be a mode set by the user.

In at least one embodiment, the user equipment may perform mapping between the first to third specific positions SP_1, SP_2, and SP_3 and the first to third specific modes SM_1, SM_2, and SM_3. In some embodiments, the user equipment performs mapping between the first to third specific positions SP_1, SP_2, and SP_3 and the first to third specific modes SM_1, SM_2, and SM_3 based on an input or a feedback received from a user.

In at least one embodiment, the user equipment may be configured to operate in the first specific mode SM_1 when it is determined that the current position corresponds to the first specific position SP_1. The user equipment may operate in the second specific mode SM_2 when the current position is determined to correspond to the second specific position SP_2. The user equipment may be configured to operate in the third specific mode SM_3 when the current position is determined to correspond to the third specific position SP_3.

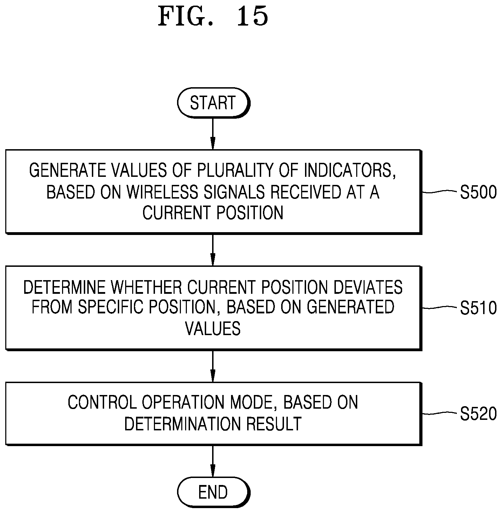

FIG. 15 is a flowchart illustrating an operating method of a user equipment, according to at least one embodiment. In the operation of the user equipment in FIG. 15, operations S500 and S510 may be understood as the operation of a positioning circuit or the operation of a baseband processor, and operation S520 may be understood as the operation of an application processor.

Referring to FIG. 15, in operation S500, the user equipment may generate values of a plurality of indicators based on wireless signals received at the current position.

In operation S510, the user equipment may determine whether the current position deviates from a specific position based on the values generated in operation S500.

In operation S520, the user equipment may control an operation mode of the user equipment based on a determination result of operation S510. For example, when it is determined that the current position deviates from the specific position, the user equipment may control the operation mode so that the user equipment operates in an operation mode prior to a specific mode.

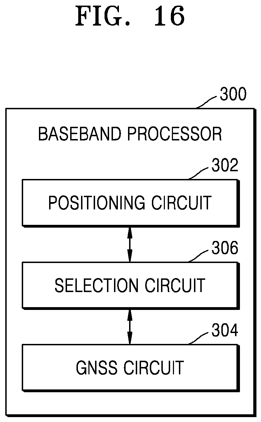

FIG. 16 is a block diagram illustrating the baseband processor 300 according to at least one embodiment.

Referring to FIG. 16, the baseband processor 300 may include a positioning circuit 302, a GNSS circuit 304, and a selection circuit 306.

In at least one embodiment, positioning circuit 302 may support a first positioning function (or neural network-based positioning function), and the GNSS circuit 304 may support a second positioning function (e.g., GNSS-based positioning function). The baseband processor 300 may support heterogeneous positioning functions through the positioning circuit 302 and the GNSS circuit 304. Meanwhile, in some embodiments, the baseband processor 300 may include a GPS circuit that supports a GPS-based positioning function instead of the GNSS circuit 304.

In at least one embodiment, the positioning circuit 302 may generate values of a plurality of indicators based on wireless signals received at the current position of the user equipment, and determine whether the current position corresponds to a specific position based on the generated values to perform position determination.

In at least one embodiment, the GNSS circuit 304 may generate positioning information about the current position of the user equipment by using radio waves transmitted from a plurality of satellites.

In at least one embodiment, the selection circuit 306 may select either the positioning circuit 302 or the GNSS circuit 304 to perform position determination according to either the first positioning function or the second positioning function.

In at least one embodiment, the selection circuit 306 may measure the current communication environment and select one of the positioning circuit 302 and the GNSS circuit 304 based on the measured current communication environment. As an example, a selected circuit may be activated and an unselected circuit may be deactivated.

However, the baseband processor 300 of FIG. 16 is only an example, and thus, the inventive concepts are not limited thereto, and the positioning circuit 302 and the GNSS circuit 304 may be activated simultaneously to utilize both the first positioning function and the second positioning function for the accurate position determination of the user equipment.

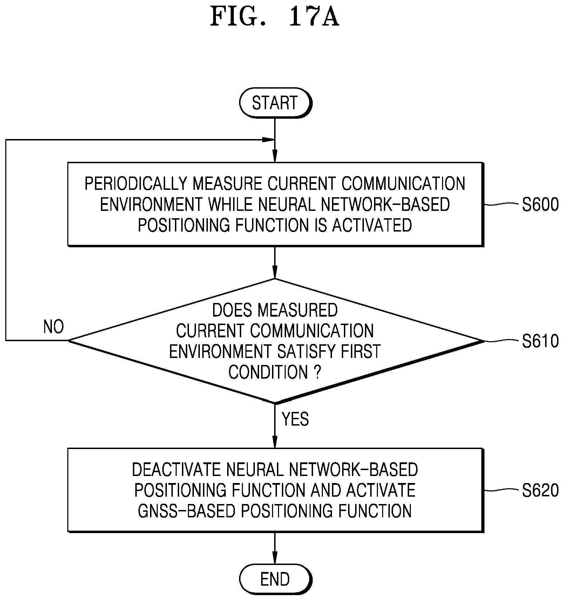

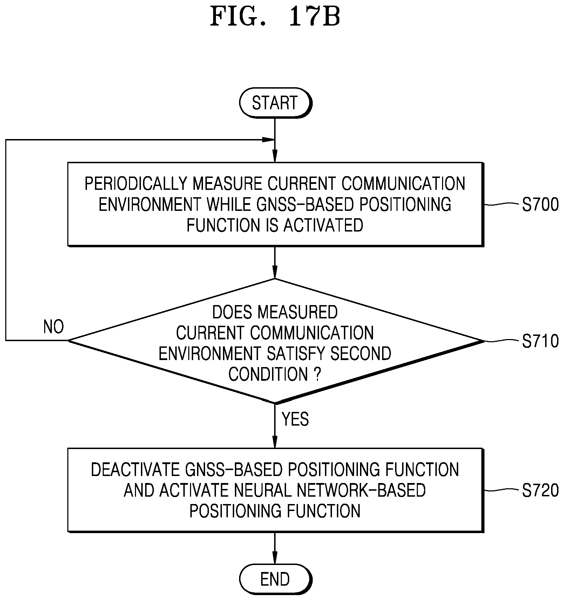

FIGS. 17A and 17B are flowcharts illustrating an operating method of a user equipment according to at least one embodiment.

Referring to FIG. 17A, in operation S600, the user equipment may periodically measure the current communication environment while a neural network-based positioning function is activated.

In operation S610, the user equipment may determine whether the current communication environment measured in operation S600 satisfies a first condition. As an example, the first condition may be a condition in which the measured current communication environment corresponds to an outdoor communication environment.

When operation S610 is `YES', operation S620 follows, where the user equipment may deactivate the neural network-based positioning function and activate a GNSS-based positioning function. In at least some embodiments, the neural network-based positioning function may be automatically activated upon a determination that the user equipment has moved and/or based on a preset timer.

When operation S610 is 'NO', operation S600 may be repeated.

Referring further to FIG. 17B, in operation S700, the user equipment may periodically measure the current communication environment while the GNSS-based positioning function is activated.

In operation S710, the user equipment may determine whether the current communication environment measured in operation S700 satisfies a second condition. As an example, the second condition may be a condition in which the measured current communication environment corresponds to an indoor communication environment.

When operation S710 is `YES', operation S720 follows, where the user equipment may deactivate the GNSS-based positioning function and activate the neural network-based positioning function.

When operation S710 is 'NO', operation S700 may be repeated.

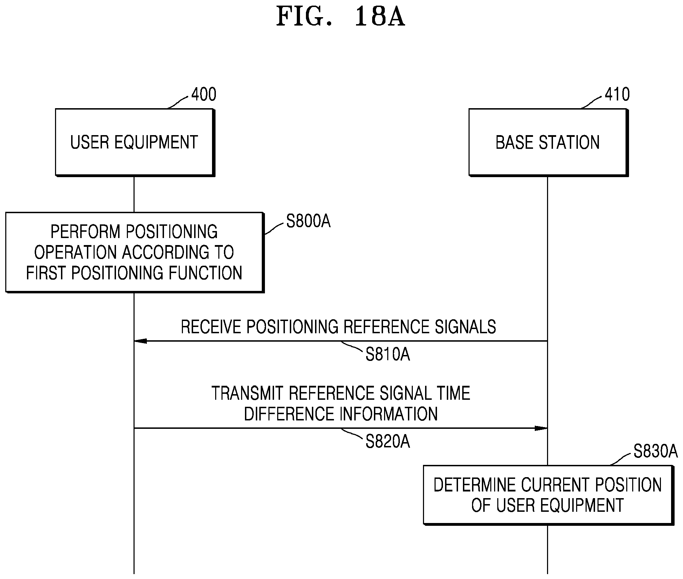

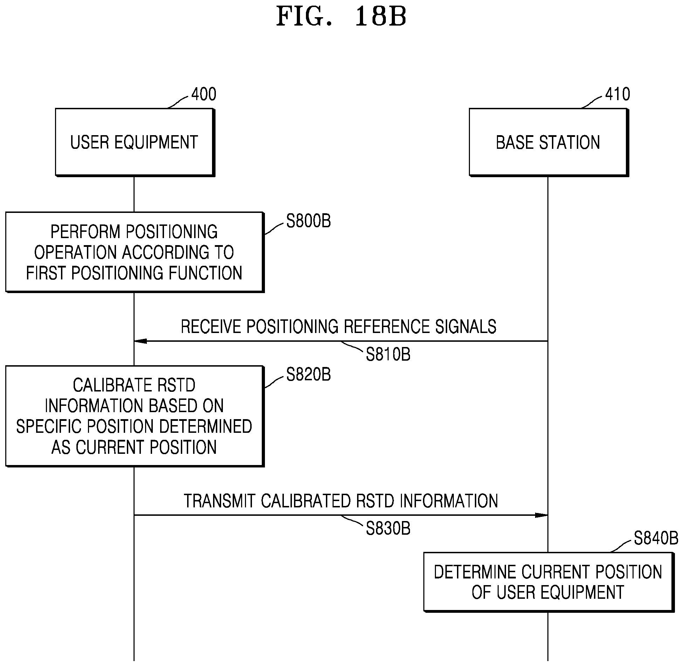

FIGS. 18A and 18B are flowcharts illustrating an operating method of a user equipment according to at least one embodiment.

Referring to FIG. 18A, in operation S800A, a user equipment 400 may perform a positioning operation on the current position according to a first positioning function. The first positioning function is the neural network-based positioning function described above, and the positioning operation may be performed by the user equipment 400 independently of base stations 410.

In operation S810A, the user equipment 400 may receive positioning reference signals from the base stations 410 including a base station connected to the user equipment 400.

In operation S820A, the user equipment 400 may transmit reference signal time difference (RSTD) information to a base station connected to the user equipment 400 among the base stations 410. In at least one embodiment, the user equipment 400 may generate RSTD information by measuring differences between reception times of the positioning reference signals received in operation S810A.

In operation S830A, the base station connected to the user equipment 400 among the base stations 410 may determine the current position of the user equipment 400 based on the received RSTD information.

In at least one embodiment, operation S800A and operation S830A may be performed independently or in parallel.

Referring further to FIG. 18B, in operation S800B, the user equipment 400 may perform a positioning operation on the current position according to the first positioning function.

In operation S810B, the user equipment 400 may receive the positioning reference signals from the base stations 410 including the base station connected to the user equipment 400.

In operation S820B, the user equipment 400 may calibrate the RSTD information based on the specific position determined as the current position. For example, a characteristic error may be present at the specific position when the user equipment 400 measures the differences between the reception times of the positioning reference signals, and the user equipment 400 may calibrate the RSTD information by considering such an error.

In operation S830B, the user equipment 400 may transmit the calibrated RSTD information to the base station connected to the user equipment 400 among the base stations 410.

In operation S840B, the base station connected to the user equipment 400 among the base stations 410 may determine the current position of the user equipment 400 based on the calibrated RSTD information.

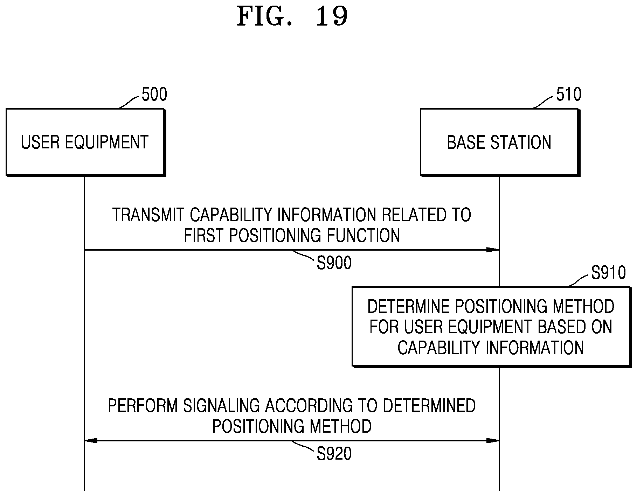

FIG. 19 is a flowchart illustrating an operating method of a user equipment 500, according to at least one embodiment.

Referring to FIG. 19, in operation S900, the user equipment 500 may transmit information related to a first positioning function. In at least one embodiment, the user equipment 500 may transmit capability information indicating support for the first positioning function to the base station 510 in a radio resource control (RRC) connection with the base station 510.

In operation S910, the base station 510 may determine a positioning method for the user equipment 500 based on the capability information received in operation S900. As an example, when the user equipment 500 supports the first positioning function, the base station 510 may determine a positioning method used to obtain a result of positioning performed on the user equipment 500 from the user equipment 500 and perform position determination on the user equipment 500 at the base station 510.

In operation S920, the base station 510 may perform signaling with the user equipment 500 according to the positioning method determined in operation S910.

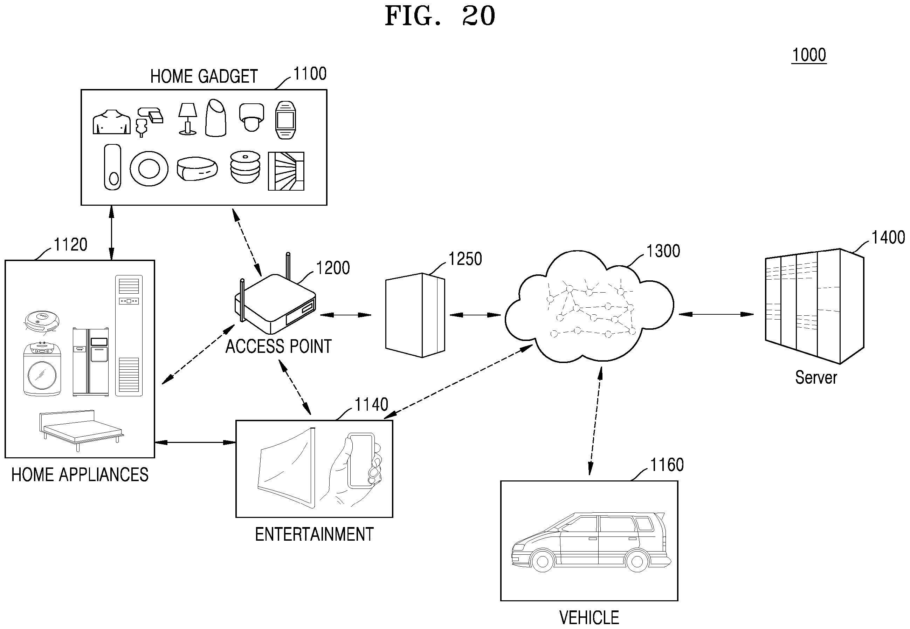

FIG. 20 is a conceptual diagram illustrating an Internet of Things (IoT) network system 1000 to which embodiments are applied.

Referring to FIG. 20, the IoT network system 1000 may include a plurality of IoT devices 1100, 1120, 1140, and 1160, an AP 1200, a gateway 1250, a wireless network 1300, and a server 1400. IoT may indicate a network among things using wired/wireless communication.

The plurality of IoT devices 1100, 1120, 1140, and 1160 may be grouped according to the characteristics thereof. For example, the plurality of IoT devices 1100, 1120, 1140, and 1160 may be grouped to a home gadget group 1100, a home appliance/furniture group 1120, an entertainment group 1140, and a vehicle group 1160. The IoT devices 1100, 1120, and 1140 may be connected to a communication network or another IοT device through the AP 1200. The AP 1200 may be embedded in one IoT device. The gateway 1250 may change a protocol to connect the AP 1200 to an external radio network. The IoT devices 1100, 1120, and 1140 may be connected to an external communication network through the gateway 1250. The wireless network 1300 may include the Internet and/or a public network. The plurality of IoT devices 1100, 1120, 1140, and 1160 may be connected, through the wireless network 1300, to the server 1400 that provides a certain service, and a user may use the certain service through at least one of the plurality of IoT devices 1100, 1120, 1140, and 1160.

According to embodiments, one or more of the plurality of IoT devices 1100, 1120, 1140, and 1160 may support a neural network-based positioning function to determine whether a position thereof corresponds to a specific position.

As used herein, such terms as "first", "second" and "third" may be used to simply distinguish a corresponding component, operation or signal from another, and does not necessarily limit the components, operations, or signals in other aspects (e.g., importance or order).

While the inventive concepts have been particularly shown and described with reference to embodiments thereof, it will be understood that various changes in form and details may be made therein without departing from the scope of the following claims.

## Claims

1. A user equipment configured to support a first positioning function, the user equipment comprising:
a transceiver configured to receive first wireless signals from a base station at a first position of the user equipment; and
a first processor configured to control the transceiver,
wherein the first processor is further configured to generate first values of a plurality of first indicators based on the first wireless signals, to determine whether the first position corresponds to a first specific position based on the first values, and to perform an operation according to the first positioning function based on a determination that the first position corresponds to the first specific position.

2. The user equipment of claim 1, wherein the first processor is configured to input the first values to a neural network model and to determine whether the first position corresponds to the first specific position based on an output of the neural network model.

3. The user equipment of claim 1 or claim 2, wherein
the transceiver is further configured to receive second wireless signals from the base station at a second position of the user equipment and to transmit third wireless signals to the base station, and
the first processor is further configured to generate second values of the plurality of first indicators based on the second wireless signals and to register the second position as a second specific position.

4. The user equipment of claim 3, further comprising:
a user interface configured to receive a registration request for the second position from a user; and
a second processor configured to transmit the registration request to the first processor,
wherein the first processor is further configured to register the second position as the second specific position in response to the registration request.

5. The user equipment of claim 4, wherein
the second processor is further configured to transmit type information of a new specific position to the first processor, the type information received along with the registration request from the user interface, and
the first processor is further configured to transmit guide information for receiving the second wireless signals to the user interface through the second processor based on the type information.

6. The user equipment of claim 5, wherein the type information includes information indicating whether the new specific position corresponds to at least one of a specific floor or a specific region.

7. The user equipment of any of claims 3-6, wherein the first processor is configured to perform a monitoring operation, and to register the second position as the second specific position in response to a result of the monitoring operation satisfying an automatic registration condition.

8. The user equipment of claim 7, wherein the monitoring operation includes analyzing patterns of the second wireless signals and patterns of third wireless signals.

9. The user equipment of any of claims 3-8, wherein the first processor is further configured to register the second specific position by training a neural network model based on the second values.

10. The user equipment of any preceding claim, wherein
the plurality of first indicators include at least one of a global cell identifier, hereinafter referred to as ID, a physical cell ID, a frequency band, a bandwidth, reference signal received power, reference signal received quality, a received signal strength indicator, a signal to interference plus noise ratio, the number of resource blocks, a channel quality indicator, a rank indicator, a precoding matrix indicator, a modulation and coding scheme, a modulation order, a block error rate, transmission power, a Doppler frequency, or a delay spread.

11. The user equipment of any preceding claim, further comprising:
a second processor configured to control the user equipment to operate in a specific mode corresponding to the first specific position based on the determination that the first position corresponds to the first specific position.

12. The user equipment of any preceding claim, wherein the plurality of first indicators include indicators corresponding to type information of the first specific position.

13. The user equipment of any preceding claim, wherein the first processor is further configured to
generate second values of the plurality of first indicators based on second wireless signals received through the transceiver after determining that the first position corresponds to the first specific position, and
determine whether the user equipment has left the first specific position based on the second values.

14. The user equipment of any preceding claim, wherein
the user equipment is configured to further support a second positioning function, and
the first processor is further configured to selectively activate the first positioning function and the second positioning function based on a current communication environment.

15. The user equipment of claim 14, wherein the second positioning function is a global navigation satellite system-based positioning function.
